## Europäisches Patentamt
## European Patent Office
## Office européen des brevets

(19)

(11) Veröffentlichungsnummer: **0 269 734**
**A1**

(12) # EUROPÄISCHE PATENTANMELDUNG
Veröffentlicht nach Art. 158 Abs. 3 EPÜ

(21) Anmeldenummer: 86904461.0

(22) Anmeldetag: 31.03.86

Daten der zugrundeliegenden internationalen Anmeldung:

(86) Internationale Anmeldenummer:
PCT/SU86/00027

(87) Internationale Veröffentlichungsnummer:
WO87/06000 (08.10.87 87/22)

(51) Int. Cl.³: **G 01 M 11/06**

(43) Veröffentlichungstag der Anmeldung:
08.06.88 Patentblatt 88/23

(84) Benannte Vertragsstaaten:
CH DE FR GB IT LI SE

(71) Anmelder: **NAUCHNO-ISSLEDOVATELSKY I EXPERIMENTALNY INSTITUT AVTOMOBILNOGO ELEKTROBORUDOVANIA I AVTOPRIBOROV**
ul. Kirpichnaya, 39/41
Moscow 105187(SU)

(71) Anmelder: **GOSUDARSTVENNY NAUCHNO-ISSLEDOVATELSKY INST. AVTOMOBILNOGO TRANSPORTA**
ul. Geroev Panfilovtsev, 24
Moscow 123514(SU)

(72) Erfinder: **NOVAKOVSKY, Leonid Grigorievich**
Chernitsynsky proezd, 8-119
Moscow, 107241(SU)

(72) Erfinder: **REZNIK, Alexandr Moiseevich**
bulvar Rokossovskogo, 14-39
Moscow, 107150(SU)

(72) Erfinder: **ROITMAN, Boris Aronovich**
Federativny prospekt, 6-6-51
Moscow, 111397(SU)

(74) Vertreter: **Finck, Dieter et al,**
Patentanwälte v. Füner, Ebbinghaus, Finck Mariahilfplatz 2 & 3
D-8000 München 90(DE)

(54) **ANORDNUNG UND VERFAHREN ZUR KONTROLLE DER BELEUCHTUNGSANLAGE VON LASTKRAFTWAGEN.**

(57) Die Einrichtung zur Diagnostik von Scheinwerfern von Transportmitteln enthält ein an einer Führung des Stativs angeordnetes Gehäuse (1), ein im Gehäuse (1) befestigtes optisches System (4), welches aus einem Objektiv (5) und einem mit Kontrollmarkierung (7) versehenen und in der Fokalebene des Objektivs (5) liegenden Schirm besteht, die im Gehäuse (1) befestigt sind, sowie eine Messbaugruppe (8), die an das optische System (4) angekoppelt ist, und ein System (11) zur Orientierung des optischen System in Bezug auf die Fahrrichtung des Transportmittels. Dieses Orientierungssystem (11) besteht aus einem Justierspiegel (12) mit einem zur optischen Achse des Objektivs (5) perpendikulär liegenden Visierindex (13) und aus zwei Bildsucherspiegel (14, 15), die am Gehäuse (1) so gelenkig angebaut sind, dass die Drehachsen der beiden Bildsucherspiegel (14, 15) gegenseitig parallel verlaufen und in den Ebenen liegen, die parallel der Vertikalebene durch die optische Achse des Objektivs (5) des optischen Systems (4) gehenden. sind.

Das Verfahren zur Diagnostik von Scheinwerfern von Transportmitteln beinhaltet die Orientierung des optischen Systems (4) nach der Abbildung der Karosserie (26) des Transportmittels (25) durch aufeinanderfolgendes Anvisieren der Abbildung von symmetrischen Punkten der Karosserie (26) auf dem Justierspiegel (12) mit Hilfe von zwei Bildsucherspiegeln (14, 15).

./...

FIG.1

# EINRICHTUNG UND VERFAHREN ZUR DIAGNOSTIK VON SCHEINWERFERN VON TRANSPORTMITTELN

## Gebiet der Technik

Die Erfindung betrifft das Gebiet der Lichttechnik, insbesondere eine Einrichtung und ein Verfahren zur Diagnostik von Scheinwerfern von Transportmitteln.

Es ist eine Einrichtung zur Diagnose von Scheinwerfern von Transportmitteln weitgehend bekannt, welche (s. z.B. SU-Urheberschein Nr. 463887, Int. Cl. G OI M II/06) ein Gehäuse, das vertikal verschiebbar und horizontal drehbar und horizontal drehbar an einer Führung des auf einem beweglichen Untergestellt angeordneten Stativs befestigt ist, sowie ein optisches System enthält, welches aus einem Objektiv und einem in der Fokalebene des Objektivs liegenden Schirm besteht. Der Schirm weist eine Kontrollmarkierung auf. Die Einrichtung enthält auch eine Messbaugruppe, die aus einem im Brennpunkt des Objektivs des optischen Systems liegenden Lichtempfänger und einem an den Lichtempfänger angeschlossenen und im Gehäuse eingebauten elektrischen Messgerät besteht. Am Gehäuse befindet sich ein Mittel zur Orientierung des optischen Systems in Bezug auf die Fahrrichtung eines Transportmittels. Dieses Orientierungsmittel stellt ein optisch transparentes mehrflächige Prisma dar, bei dem auf einer Fläche Kontrollmarkierung aufgetragen ist, die als Visierindex dient. Das Prisma ist auf einer geköpften Konsole gelenkig befestigt. Ein Arm der Konsole liegt am Gehäuse parallel zur Achse des Objektivs des optischen Systems und ermöglicht die Drehbewegung der Konsole in der Vertikalebene. Am zweiten Arm der Konsole ist das Prisma gelenkig angebaut, welches in der parallel zur optischen Achse des Objektivs liegenden Vertikalebene geschwenkt werden kann. Dabei liegt eine Liniengruppe der Kontrollmarkierung (des Visierindexes) parallel zur optischen Achse des Objektivs, während die andere Liniengruppe der Kontrollmarkierung senkrecht auf der optischen Objektivachse steht.

Mit dieser Einrichtung wird ein Verfahren zur Diag-

nostik von Scheinwerfern von Transportmitteln realisiert, bei dem ein Transportmittel auf einer ebenen Fläche aufgestellt wird, das optische System der Einrichtung zur Diagnose von Scheinwerfern der Transportmittel gegenüber einem Scheinwerfer des Transportmittels angeordnet wird, das optische System nach der Abbildung der Karosserie des Transportmittels durch gleichzeitiges Anvisieren der Abbildung der ganzen Karosserielinie orientiert wird, die zur Symmetrieachse des Transportmittels bei Orientierung des optischen Systems der Einrichtung in Fahrrichtung des Transportmittels perpendikulär liegt.

Bei solchem Verfahren und bei derartiger Ausführung der Einrichtung zu seiner Realisierung wird aber die ausreichende Genauigkeit der Diagnostik von Scheinwerfern von Transportmitteln nicht erreicht, wobei auch die Arbeitsleistung beim Orientierungsvorgang niedrig bleibt, da die Orientierung des optischen Systems der Einrichtung nach der Vertikalprojektion der Karosserieabbildung erfolgt und dabei die Fehler nicht berücksichtigt werden können, die infolge der nichtausgeglichenen Aufhängung, der Druckdifferenz in den Radreifen sowie deswegen entstehen, dass zur Realisierung dieses Verfahrens die Drehung des Prismas mehrfach wiederholt werden muss. Dieses Verfahren gibt auch keine Möglichkeit, bei der Diagnostik von Scheinwerfern eines Transportmittels von grösserer Breite die Abbildung von symmetrischen Punkten der Karosserie des Transportmittels am Visierindex gleichzeitig zu fixieren.

Weit bekannt ist auch eine Einrichtung zur Kontrolle der Einstellung von Scheinwerfern von Transportmitteln (s. z.B. SU-Urheberschein Nr. 388658, Int. Ck. G OI M II/06), bei der das Gehäuse an einer Vertikalführung eines Stativs angeordnet ist und vertikal verschoben sowie in der Horizontalebene geschwenkt werden kann. Das Stativ ist auf einem beweglichen Untergestell befestigt. Die Einrichtung enthält auch ein optisches System, das aus einem Objektiv und einem in der Fokalebene des Objektivs angeordneten Schirm besteht. Der Schirm ist mit einer Kontrollmarkierung versehen.

Zur Einrichtung gehört ausserdem eine Messbaugruppe, die einen Lichtempfänger enthält, im Brennpunkt des Objektivs liegt und an ein eim Gehäuse der Einrichtung eingebautes elektrisches Messgerät angeschlossen ist. Am Stativ ist ein System zur Orientierung des optischen Systems nach der Fahrrichtung des Transprotmittels angeordnet. Dieses Orientierungssystem besteht aus zwei Spiegeln: aus einem Visierspiegel und einem Justierspiegel. Der Visierspiegel ist an der Konsole im oberen Teil des Statives gelenkig befestigt, wobei das zylindrische Gelenk des Stativs die Drehung dieses Spiegels um die Achse ermöglicht, die auf der optischen Objektivachse senkrecht steht. Der Justierspiegels ist ein Visierindex aufgetragen, der perpendikulär zur optischen Objektivachse liegt.

Mit dieser Einrichtung wird ein weitgehend bekanntes Verfahren zur Orientierung des optischen Systems in Bezug auf die Fahrrichtung des Transportmittels realisiert, bei dem ein Transportmittel auf einer benen Fläche aufgestellt wird, das optische System der Einrichtung zur Diagnostik von Scheinwerfern der Transportmittel gegenüber einem der Scheinwerfer des Transportmittels angeordnet wird und das optische System nach der Abbildung der Karosserie des Transportmittels durch gleichzeitiges Anvisieren der ganzen Karosserielinie des Transportmittels orientiert wird, die perpendikulär zur Symmertieachse des Transportmittels liegt. Diese Einrichtung ergibt aber eine minimal zulässige Orientierungsgenauigkeit und weist niedrige ergonomische Kennwerte infolge der oberen Lage des Visierspiegels auf. Die mit der Einrichtung erreichbare Arbeitsleistung ist auch niedrig, da es bei der Arbeit mit Transportmitteln von grösserer Breite unmöglich ist, die Abbildung der beiden symmetrischen Karosseriepunkte, die an der für das Visieren benutzten Linie liegen, (sowohl mit dem Visierspiegel als auch mit dem Justierspiegel) gleichzeitig zu fixieren, und die Linie selbst infolge des komplizierten Karosserieprofils bei gegenwärtigen Kraftfahrzeugen nicht ausreichend eindeutig vorgegeben werden kann.

Aber auch in den Fällen, wenn es möglich ist, im Orientierungssystem die beiden symmetrischen Karosseriepunkte des Transportmittels zu fixieren, werden ihre Abbildungen im Justierspiegel an verschiedenen weit voneinander entfernten Rändern des Visierindexes liegen, wobei die Genauigkeit der Einrichtung verringert wird und ein Justierspiegel von grösseren Abmessungen benutzt werden muss.

Der Erfindung liegt die Aufgabe zugrunde offenbarung der Erfindung, eine Einrichtung und ein Verfahren zur Diagnostik von Scheinwerfern von Transportmitteln zu entwickeln, bei denen der Aufbau des Systems zur Orientierung des optischen Systems in Bezug auf die Fahrrichtung des Transportmittels und die Durchführung der Orientierung des optischen Systems in Bezug auf die Fahrrichtung des Transportmittels die Möglichkeit geben, die Genauigkeit der Orientierung des optischen Systems zu erhöhen und die Abmessungen der Einrichtung sowie ihr Gewicht zu verringern.

Dies wird dadurch erreicht, dass in der zur Diagnostik von Scheinwerfern von Transportmitteln bestimmten Einrichtung mit einem an einer Führung des Stativs angeordneten und vertikal verschiebbaren Gehäuse, einem im Gehäuse eingebauten optischen System, welches ein Objektiv und einen mit Kontrollmarkierung versehenen und in der Fokalebene des Objektivs liegenden Schirm enthält, sowie mit einer Messbaugruppe, die an das optische System angekoppelt ist, und mit einem zur Orientierung des optischen Systems in Bezug auf die Fahrrichtung des Transportmittels bestimmten System, das aus einem am Gehäuse gelenkig angebauten Justierspiegel mit einem zur optischen Objektivachse perpendikulär liegenden Visierindex und aus einem Bildsucherspiegel besteht, der die Abbildung der Karosserie des Transportmittels auf die Oberfläche des Justierspiegels projiziert, erfindungsgemäss das System zur Orientierung des optischen Systems in Bezug auf die Fahrrichtung des Transportmittels mit einem zusätzlichen Bildsucherspiegel versehen ist, der am Gehäuse so gelenkig befestigt ist, dass die Drehachsen der beiden Bildsucherspiegel zueinander parallel verlaufen und in den Ebenen liegen, die parallel der durch die optische Objektivachse gehenden Vertikalebene sind.

Zur weiteren Verringerung der Abmessungen der Einrichtung und zur Verbesserung ihrer ergonomischen Eigenschaften ist es zweckmässig, den Justierspiegel und die beiden Bildsucherspiegel im System zur Orientierung des optischen Systems in Bezug auf die Fahrrichtung des Transportmittels gelenkig auf einer am Gehäuse in der Vertikalebene drehbar befestigten Tragplatte zu montieren.

Die Aufgabe der Erfindung wird auch dadurch gelöst, dass beim Verfahren zur Diagnostik von Scheinwerfern von Transportmitteln, bei dem ein Transportmittel auf einer ebenen Fläche aufgestellt wird, das optische System der Einrichtung zur Diagnostik von Scheinwerfern der Transportmittel angebaut wird, das optische System nach der Abbildung der Karosserie des Transportmittels durch Anvisieren von symmetrischen Punkten der Karosserie des Transportmittels orientiert wird, erfindungsgemäss die Orientierung des optischen Systems nach der Abbildung der Karosserie des Transportmittels durch aufeinanderfolgendes Anvisieren der Abbildung von symmetrischen Punkten der Karosserie des Transportmittels auf dem Justierspiegel mittels der zwei Bildsucherspiegel durchgeführt wird.

Die Anwendung der vorgeschlagenen Einrichtung und des Verfahrens zur Diagnostik von Scheinwerfern von Transportmitteln gibt die Möglichkeit, das System zur Orientierung des optischen Systems in Bezug auf die Fahrrichtung des Transportmittels mit kleineren Abmessungen aufzubauen, die unter den Abmessungen der zusammengebauten Einrichtung liegen. Das aufeinanderfolgende Projizieren von symmetrischen Karosseriepunkten auf den Justierspiegel mit Hilfe von zwei Bildsucherspiegeln gestattet es ausserdem, den gegenseitigen Abstand der Abbildungen dieser Punkte auf dem Justierspiegel minimal (bis zur Deckung) zu verringern.

-6-

Dies führt zur Erhöhung der Genauigkeit, da der Fehler der relativen Lage der Abbildung von symmetrischen Karosseriepunkten des Transportmittels und der Lage des Visierindex auf dem Justierspiegel herabgesetzt wird.

Kurze Beschreibung der Zeichnungen

Weitere Ziele und Vorteile der Erfindung ergeben sich aus der nachstehenden ausführlichen Beschreibung der Einrichtung und des Verfahrens zur Diagnostik von Scheinwerfern von Transportmitteln sowie aus den beigefügten Zeichnungen. Hierbei zeigen:

Fig. I eine erfindungsgemässe Einrichtung zur Diagnostik von Scheinwerfern der Transportmittel;

Fig. 2 ein optisch-mechanisches Schema einer Ausführungsvariante des Verfahrens zur Diagnostik von Scheinwerfern der Transportmittel gemäss der Erfindung;

Fig. 3 ein optisch-mechanisches Schema der anderen Ausführungsvariante des Verfahrens zur Diagnostik von Scheinwerfern der Transportmittel gemäss der Erfindung.

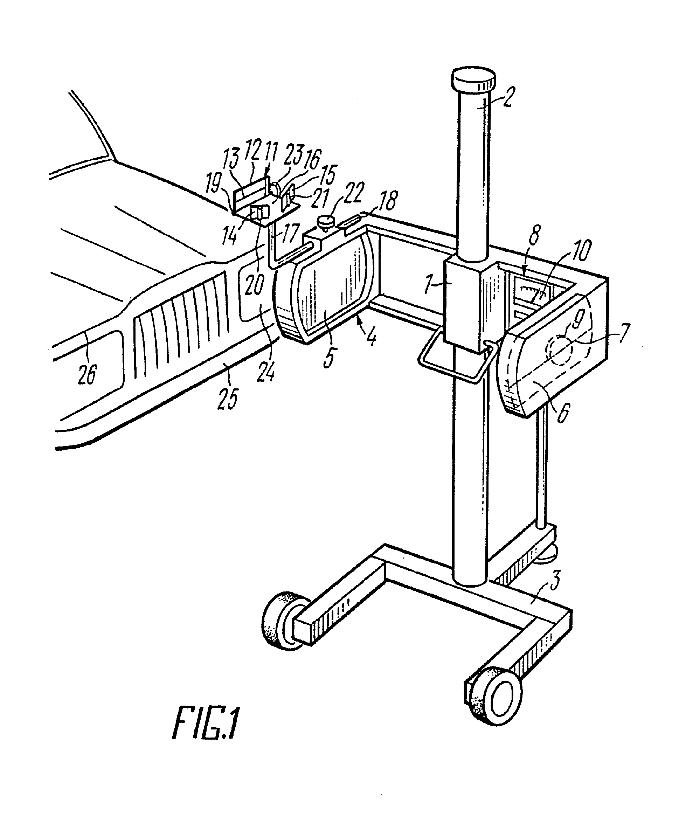

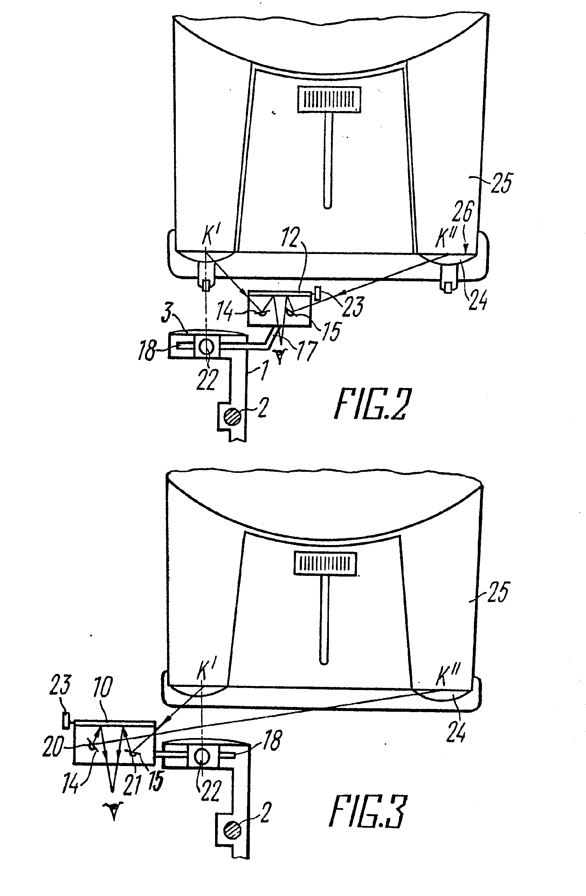

Bevorzugte Ausführungsform der Erfindung

Die Einrichtung zur Diagnostik von Scheinwerfern von Transportmitteln enthält ein Gehäuse I, das an einer Führung 2 des Stativs 3 vertikal verschiebbar befestigt ist, und ein im Gehäuse I eingebautes optisches System 4, welches aus einem Objektiv 5 und einem in der Fokalebene des Objektivs 5 liegenden Schirm 6 mit Kontrollmarkierung 7 besteht. An das optische System 4 ist eine Messbaugruppe 8 angekoppelt, die einen in der Fokalebene des Objektivs 5 liegenden Lichtempfänger 9 und ein im Gehäuse I eingebautes Mikroampermeter IO enthält, welches an den Lichtempfänger 9 angeschlossen ist. Zur Einrichtung gehört auch ein System II zur Orientierung des optischen Systems in Bezug auf die Fahrrichtung des Transportmittels. Dieses Orientierungssystem II besteht aus drei Spiegeln: aus einem Justierspiegel I2 mit einem Visierindex I3 und aus zwei Bildsu-

cherspiegeln I4, I5. Die Spiegel I2, I4, I5 sind einer Tragplatte I6 angeordnet, die am Gehäuse I mit Hilfe einer Konsole I7 angebaut ist, deren Arm I8 die Drehachse des Systems II zur Orientierung des optischen Systems bildet und die Drehung des Systems II in der Vertikalebene ermöglicht. Die Spiegel I2, I4,I5 sind auch an den Achsen I9, 20 bzw. 2I gelenkig befestigt, die auf der Platte I6 montiert sind. Die Achse I9 liegt parallel zum Visierindex I3 des Spiegels I2 und perpendikulär zur optischen Achse des Objektivs 5. Die Achsen 20, 2I sind einander parallel und stehen senkrecht zur ebenen Platte I6 und bezüglich der Lage der Achse I9. Zur Fixierung der Lage der Konsole I7 und des Justierspiegels I2 kann die Einrichtung mit Festhaltern 22, 23 versehen sein.

Die Wirkungsweise der Einrichtung und das Verfahren zur Diagnostik von Scheinwerfern von Transportmitteln besteht im folgenden.

Die Einrichtung zur Diagnostik von Scheinwerfern von Transportmitteln wird gegenüber einem Scheinwerfer 24 (Fig. I) des Transportmittels 25 auf einer ebenen Fläche aufgestellt. Das optische System 4 wird auf eine Höhe verschoben, bei der die Mittelpunkte des Scheinwerfers 24 und des Objektivs 5 zusammenfallen. Darauf dreht man die Konsole I7 um ihren Arm I8 und wählt dadurch eine für den Bediener bequeme Höhenlage des Orientierungssystems II sowie den Neigungswinkel des Orientierungssystems II in Bezug auf die zum Anvisieren gewählte Fläche des Transportmittels 25, worauf man die Lage der Konsole I7 mit dem Festhalter 22 fixiert. Die Bildsucherspiegel I4 und I5, welche die Abbildung der Karoserrie 26 des Transportmittels 25 auf die Oberfläche des Justierspiegels I2 projizieren, dreht man um die Achse 20 bzw. 2I, bis der Bediener die Punkte k' und k'' auf dem Justierspiegel I2 (Fig. 2) anvisieren kann und diese Punkte mit der Lage des Visierindex I3 (Fig. I) zusammenfallen. Dann wird im Scheinwerfer 24 das Abblendlicht eingeschaltet und die Einstellung des Scheinwerfers 24 nach der Kontrollmarkierung 7 des Schir-

mes 6 geprüft, wobei man mit Hilfe der Messbaugruppe 8 die Diagnostik des Scheinwerfers 24 durchführt. Diesen Diagnostikvorgang wiederholt man auch nach der Umschaltung des Schweinwerfer 24 des Transportmittels 25 auf Fernlicht.

Möglich sind zwei Realisierungsvarianten des Verfahrens zur Orientierung des optischen Systems nach der Fahrrichtung des Transportmittels.

Bei der ersten Variante projiziert man nacheinander auf den Justierspiegel I2 mit Hilfe der Bildsucherspiegel I4 (Fig. 2) und I5 die Punkte k' und k'' der Karosserie 26, die gegenüber den entsprechenden Spiegeln liegen, d. h. wird mit dem Spiegel I4 der Punkt k' und mit dem Spiegel I5 der Punkt k'' projiziert.

Bei der zweiten Variante dreht man die Bildsucherspiegel I4 (Fig. 3) und I5 so, dass die Punkte k' und k'' auf den Justierspiegel I2 nacheinander projiziert werden, und zwar der Punkt k' mit dem Bildsucherspiegel I5 und der Punkt k'' mit dem Bildsucherspiegel I4.

Mit der Realisierung der vorgeschlagenen Einrichtung und des Verfahrens zur Diagnostik von Scheinwerfern von Transportmitteln ergibt sich die Möglichkeit, bei der Herstellung der Einrichtung Material einzusparen und auf Grund der höheren Arbeitsgenauigkeit die beim Betrieb der Transportmittel entstehenden Defekte von Elementen der Beleuchtungssysteme (Defekt der Lichtquellen, der Reflektoren, der Steuerscheiben, Spannungsabfall im Stromkreis der Lichtquellen) durch die Durchführung der Diagnostik rechtzeitig zu erkennen.

Gewerbliche Anwendbarkeit

Die Erfindung kann in Kraftwagen-Transportbetrieben, beim Kraftfahrzeugservice, in Kraftfahrzeugwerken angewandt werden.

PATENTANSPRUCHE

I. Einrichtung zur Diagnostik von Scheinwerfern von Transportmitteln mit einem an einer Führung (2) des Stativs (3) angeordneten vertikale verschiebbaren Gehäuse (I), einem im Gehäuse (I) eingebauten optischen System (4), welches ein Objektiv (5) und einen mit Kontrollmarkierung (7) versehenen und in der Fokalebene des Objektivs (5) liegenden Schirm (6) enthält, die im Gehäuse befestigt sind, sowie mit einer Messbaugruppe (8), die an das optische System (4) angekoppelt ist, und mit einem zur Orientierung des optischen Systems in Bezug auf die Fahrrichtung des Transportmittels bestimmten System (II), das aus einem am Gehäuse (I) gelenkig angebauten Justierspiegel (I2) mit einem zur optischen Achse des Objektivs (5) perpendikulär liegenden Visierindex (I3) und aus einem Bildsucherspiegel (I4) besteht, der die Abbildung der Karosserie (26) des Transportmittels (25) auf die Oberfläche des Justierspiegels (I2) projiziert, dadurch g e k e n n - z e i c h n e t, dass das System (II) zur Orientierung des optischen Systems in Bezug auf die Fahrrichtung des Transportmittels einen zusätzlichen Bildsucherspiegel (I5) enthält, der am Gehäuse (I) so gelenkig befestigt ist, dass die Drehachsen der beiden Bildsucherspiegel (I4, I5) zueinander parallel verlaufen und in den Ebenen liegen, die parallel der druch die optische Achse des Objektivs verlaufenden Vertikalebene sind.

2. Einrichtung zur Diagnostik von Scheinwerfern von Transportmitteln nach Anspruch I, dadurch g e k e n n - z e i c h n e t, dass der Justierspiegel (I2) und die beiden Bildsucherspiegel (I4, I5) des Systems (II) zur Orientierung des optischen Systems in Bezug auf die Fahrrichtung des Transportmittels auf einer am Gehäuse (I) in der Vertikalebene drehbar befestigten Tragplatte (I6) gelenkig montiert sind.

3. Verfahren zur Diagnostik von Scheinwerfern von Transportmitteln bei dem ein Transportmittel (25) auf einer

ebenen Fläche aufgestellt wird, das optische System (4) der Einrichtung zur Diagnostik von Scheinwerfern der Transportmittel gegenüber einem der Scheinwerfer (24) des Transportmittels (25) angeordnet wird und das optische System nach der Abbildung der Karoseerie (26) des Transportmittels (25) durch Anvisieren von symmetrische Puhkten der Karosserie auf dem Justierspiegel (I2) orientiert wird, dadurch g e k e n n z e i c h n e t, dass die Orientierung des optischen Systems (4) nach der Abbildung der Karosserie (26) des Transportmittels (25) durch aufeinanderfolgendes Anvisieren der Abbildung von symmetrischen Punkten der Karosserie (26) des Transportmittels (25) auf dem Justierspiegel (I2) mittels der zwei Bildsucherspiegel (I4, I5) durchgeführt wird.

FIG.1

**FIG.2**

**FIG.3**

# INTERNATIONAL SEARCH REPORT

0269734

International Application No PCT/SU 86/00027

## I. CLASSIFICATION OF SUBJECT MATTER (if several classification symbols apply, indicate all) *

According to International Patent Classification (IPC) or to both National Classification and IPC

$IPC^4$: G 01 M 11/06

## II. FIELDS SEARCHED

| Minimum Documentation Searched [7] | |
|---|---|
| Classification System | Classification Symbols |
| $IPC^4$ | G 01 M 11/06 |

Documentation Searched other than Minimum Documentation
to the Extent that such Documents are Included in the Fields Searched [8]

## III. DOCUMENTS CONSIDERED TO BE RELEVANT [9]

| Category * | Citation of Document, [11] with indication, where appropriate, of the relevant passages [12] | Relevant to Claim No. [13] |
|---|---|---|
| A | DE, C3, 2313583, (Nautschno-issledowatelskij i experimentalny institut awtomobilnowo elektrooborudowanija i awtopriborow), 08 September 1977 (08.09.77), see fig.1 | 1-3 |
| A | FR, A1, 2365116, (ROBERT BOSCH G.M.B.H.), 14 April 1978 (14.04.78), see figure 1 | 1-3 |
| A | FR, A1, 2365115, (ROBERT BOSCH G.M.B.H.), 14 April 1978 (14.04.78), see figure 1 | 1-3 |

----------

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 29 October 1986 (29.10.86) | 02 December 1986 (02.12.86) |
| International Searching Authority | Signature of Authorized Officer |
| ISA/SU | |

Form PCT/ISA/210 (second sheet) (January 1985)